# FASCICULE DE BREVET EUROPEEN

(11) **EP 1 866 187 B1**
(45) Date de publication et mention de la délivrance du brevet: **30.03.2011**
(21) Numéro de dépôt: 05751603.1
(22) Date de dépôt: 04.04.2005
(51) Int. Cl.: B60R 16/02, H02G 11/00, F16L 3/015, F16G 13/16

(54) **DISPOSITIF DE SUPPORT ET DE GUIDAGE DE CONDUCTEURS OPTIQUES, PNEUMATIQUES, HYDRAULIQUES OU ELECTRIQUES**
VORRICHTUNG ZUM STÜTZEN UND FÜHREN VON OPTISCHEN, PNEUMATISCHEN, HYDRAULISCHEN UND ELEKTRISCHEN LEITERN
DEVICE FOR SUPPORTING AND GUIDING OPTICAL, PNEUMATIC, HYDRAULIC AND ELECTRIC CONDUCTORS

(43) Date de publication de la demande: 19.12.2007
(73) Titulaire: Leoni Wiring Systems France, 78180 Montigny le Bretonneux (FR)
(72) Inventeur: CHRETIEN, Louis, F-92500 Rueil Malmaison (FR); LAZAREFF, Paul, F-92300 Levallois Perret (FR); LAGOUTTE, Nicolas, F-75014 Paris (FR)
(74) Mandataire: Eidelsberg, Olivier Nathan
(86) Numéro de dépôt international: PCT/FR2005/000813
(87) Numéro de publication internationale: WO 2006/106190

(56) Documents cités:
- DE-A1- 19 710 450
- DE-C1- 3 823 218
- DE-C1- 4 428 680
- US-A- 6 161 373

## Description

La présente invention se rapporte à un dispositif de support et de guidage de conducteurs optiques, pneumatiques, hydrauliques et plus particulièrement électriques.

L'invention vise des dispositifs comprenant une série de maillons articulés les uns aux extrémités des autres, et dont une extrémité est reliée à un point fixe, tandis que l'autre extrémité est fixée à un élément mobile, par exemple, un siège avant ou une porte coulissante d'un véhicule automobile.

Les maillons sont conformés de manière à assurer la fixation et le guidage d'une série de conducteurs de préférence disposés en nappes tels que des conducteurs plats et destinés à être reliés, d'une part, à une source d'alimentation telle qu'une batterie de véhicule et, d'autre part, à un organe électrique à alimenter, par exemple un ou plusieurs moteurs électriques.

Dans les réalisations actuelles l'une des extrémités des conducteurs est reliée à un connecteur lui-même relié par un câblage à la source d'alimentation, tandis que l'autre extrémité est reliée à un second connecteur dont le câblage est relié à l'alimentation des organes électriques.

Une telle disposition présente un certain nombre d'inconvénients ; en effet, il faut en premier mettre en place le dispositif de support et de guidage en fixant une extrémité à une partie fixe et l'autre à la partie mobile, puis positionner les conducteurs dans le dispositif, fixer ceux-ci dans ledit dispositif et brancher les conducteurs à des connecteurs reliés à la source de courant et aux organes à alimenter électriquement. Un tel montage nécessite une main d'oeuvre importante, est long et par conséquent onéreux.

On connaît de DE 3823218 C un dispositif suivant le préambule de la revendication 1. La connexion avec les organes extérieurs se fait suivant un axe parallèle au plan des conducteurs, de sorte qu'il n'est plus possible de poursuivre la chaîne avec d'autres maillons au-delà de ce connecteur d'extrémité.

Le dispositif, selon l'invention, est destiné à guider et à supporter des conducteurs et plus particulièrement des conducteurs électriques et est tel que défini à la revendication 1, des perfectionnements étant définis aux sous revendications.

Grâce à cette disposition, on peut directement relier des conducteurs aux éléments de boîtier de sorte qu'au montage il suffit de relier les éléments de boîtier aux éléments de boîtier complémentaires.

De préférence, le dispositif comporte deux maillons conformés de manière à présenter un élément de boîtier de connecteur.

Suivant un détail constructif, les maillons conformés de manière à présenter un élément de boîtier de connecteur sont disposés aux extrémités de la chaîne.

Suivant une variante de réalisation, les maillons forment une chaîne fermée et les maillons conformés de manière à présenter un élément de boîtier sont situés en des points de la chaîne de manière que la longueur des parties de la chaîne reliant un côté des maillons conformés de manière à présenter un élément de boîtier de connecteur soit égale à la longueur des parties de la chaîne reliant l'autre côté.

Les maillons conformés de manière à présenter un élément de boîtier de connecteur comportent des moyens pour leur assujettissement sur un organe fixe ou mobile. Ainsi, on peut directement fixer la chaîne à la partie fixe et à la partie mobile.

Suivant une caractéristique constructive, les maillons conformés de manière à présenter un élément de boîtier de connecteur comportent, sur deux parois opposées, des pattes de verrouillage.

Suivant encore un détail constructif, chaque maillon conformé de manière à présenter un élément de boîtier de connecteur comprend un corps parallélépipédique avec une série de canaux destinés à recevoir, chacun, un organe de liaison tel qu'un organe de contact électrique destiné à coopérer avec un organe de liaison correspondant logé dans un élément de boîtier complémentaire, l'une des parois latérales du corps comportant deux pattes destinées à s'articuler sur le maillon voisin.

Enfin, chaque maillon conformé de manière à présenter un élément de boîtier de connecteur présente, sur la face opposée à celle pourvue des deux pattes destinées à s'articuler sur le maillon voisin, deux autres pattes destinées à s'articuler sur le maillon correspondant.

L'invention va maintenant être décrite avec plus de détails en se référant à des modes de réalisation particuliers donnés à titre d'exemple seulement et représentés au dessins annexés.
Figure 1 est une vue en élévation d'un dispositif, selon l'invention.
Figure 2 est une vue en plan correspondant à la figure 1.
Figure 3 est une vue en coupe suivant la ligne 3-3 de la figure 2.
Figure 4 est une vue en coupe similaire à la figure 3 montrant une variante de câblage.
Figure 5 montre en perspective l'élément de boîtier du connecteur.
Figure 6 est une vue en coupe suivant la ligne 6-6 de la figure 5 montrant un canal de l'élément de boîtier destiné à recevoir un organe femelle de contact électrique.
Figure 7 montre en coupe un canal de l'élément de boîtier destiné à recevoir un organe mâle.
Figure 8 montre en plan une variante de réalisation.
Figure 9 montre en élévation la variante de la figure 8.
Figure 10 montre en élévation encore une variante de l'invention.
Figure 11 montre en élévation une variante de l'élément de boîtier.
Figure 12 montre en élévation le support avec l'élément de boîtier de la figure 11.
Figure 13 est une vue en plan correspondant à la figure 12.

La présente description se rapporte à l'application de l'invention, à une installation électrique, mais celle-ci peut également être utilisée pour des installations optiques, pneumatiques ou hydrauliques.

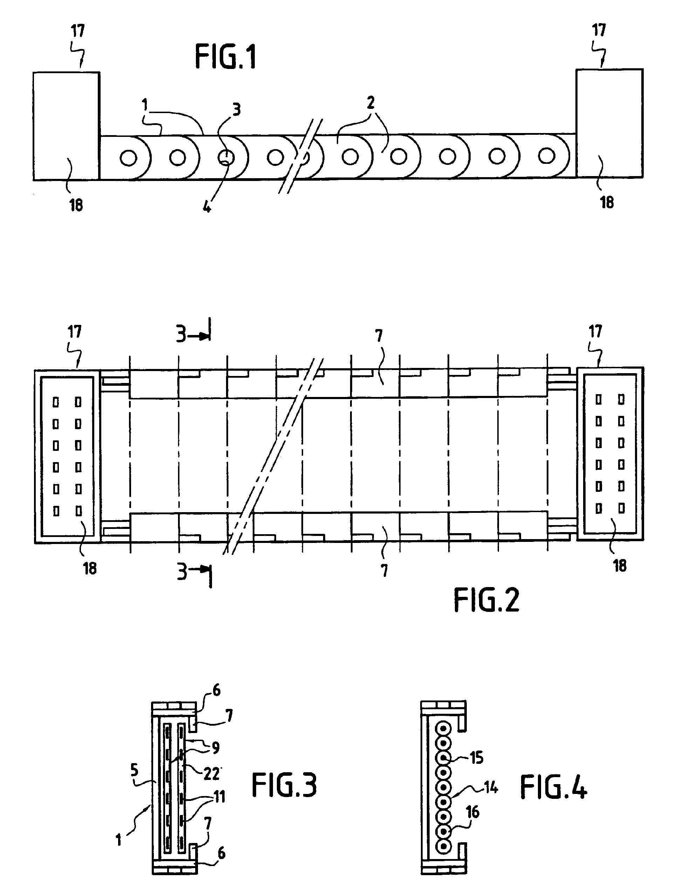

Aux figures 1 à 3, on a représenté un support d'un câblage comprenant une série de maillons 1 présentant, d'un côté, deux pattes 2, tandis que du côté opposé, ils comportent des tétons 3 destinés à s'insérer dans des trous 4 des pattes 2, ainsi les maillons forment une âme articulée.

Chaque maillon présente une âme 5 aux extrémités de laquelle s'érigent deux côtés 6 terminés par des retours 7 de manière que chaque dit maillon affecte une section en C.

Dans la chaîne formée des maillons 1 est insérée une ou plusieurs séries de conducteurs plats 9 formés de pistes conductrices méplates 11 logées dans une nappe isolante 12.

Comme montré à la figure 4, la chaîne formée des maillons 1 peut recevoir des conducteurs 14 disposés en nappes et comprenant des fils conducteurs 15 logés dans des isolants 16 accolés et solidaires les uns des autres.

Dans ce mode de réalisation, les deux maillons d'extrémité 17 sont conformés pour présenter, chacun, un élément de boîtier de connecteur électrique 18 destiné à être accouplé avec un élément de boîtier correspondant.

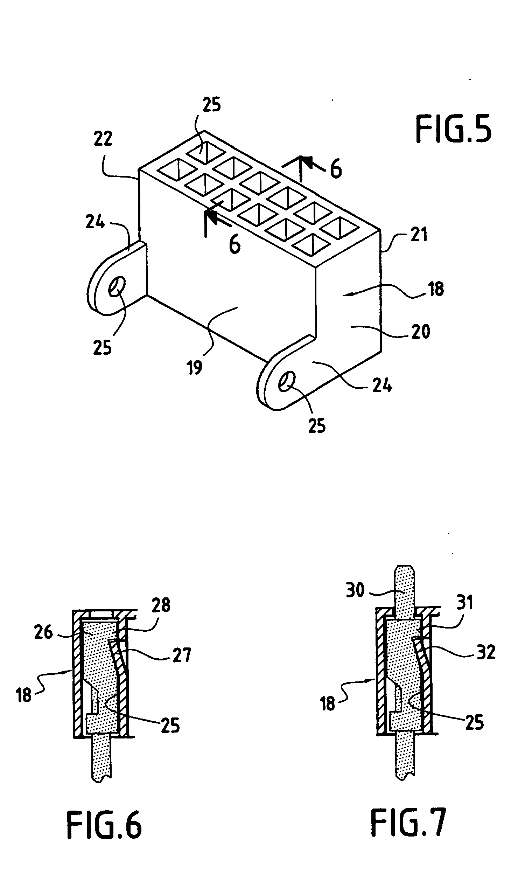

Dans ce mode de réalisation (voir figures 5 et 6), l'élément de boîtier 18 est constitué par un corps parallélépipédique comprenant quatre parois latérales 19, 20, 21 et 22, la paroi latérale 19 est pourvue de deux pattes 24 percées de trous 25 destinés à coopérer avec les tétons 3 des maillons correspondants.

L'élément de boîtier 18 présente une série de canaux 25 destinés à recevoir, chacun, un organe de liaison tel qu'un organe de contact électrique.

Les organes de contact électrique peuvent être mâles ou femelles.

A la figure 6, on a représenté un exemple d'un organe de liaison tel qu'un organe femelle 26 pourvu d'une entaille 28 avec laquelle coopère une languette de retenue 27. Les organes femelles sont destinés à recevoir des languettes mâles d'un élément de boîtier complémentaire. Ces organes femelles sont destinés à être sertis aux extrémités des conducteurs 11 ou 15.

La figure 7 montre schématiquement une variante dans laquelle l'organe de liaison est un organe de contact électrique mâle méplat ou a section circulaire 30, celui-ci comportant une butée 31 avec laquelle coopère une barrette de retenue 32. Ces organes mâles sont destinés à s'insérer dans des organes femelles prévus dans un élément de boîtier complémentaire et à être sertis aux extrémités des conducteurs 11 ou 15.

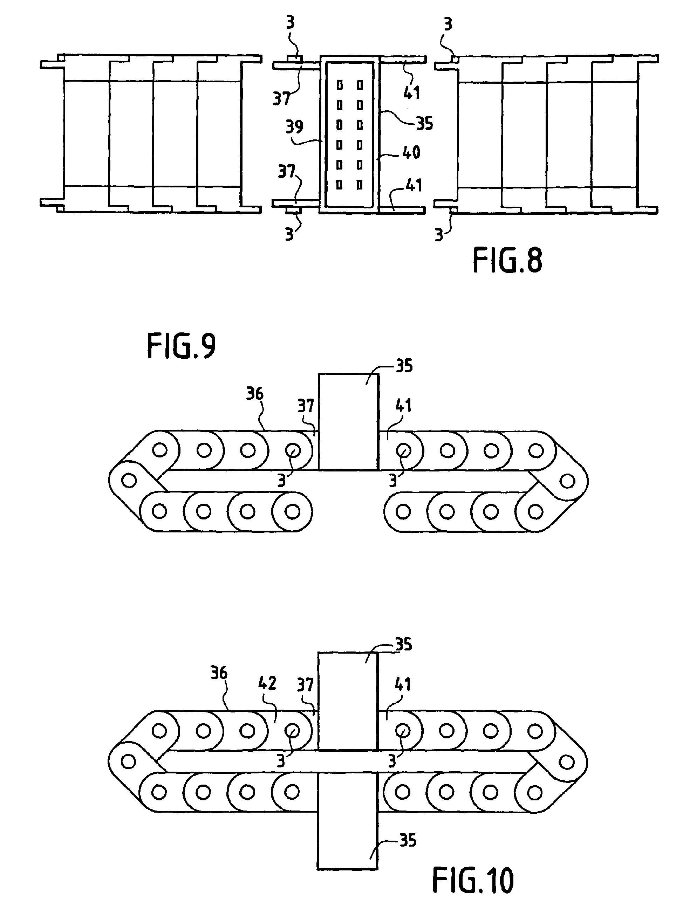

Les figures 8 et 9 montrent une variante dans laquelle un élément de boîtier d'un connecteur électrique 35 est inséré en un point intermédiaire médian d'une chaîne 36. Cet élément de boîtier présente, sur une face 39, deux pattes 37 pourvues de tétons 3 destinés à coopérer avec des trous 4 du maillon correspondant de la chaîne, tandis que la face 40, opposée à celle pourvue des pattes 37, comporte deux pattes 41 percées de trous 4 destinés à recevoir les tétons 3 du maillon correspondant.

La figure 10 montre une réalisation dans laquelle la chaîne 42 est fermée et présente deux éléments de boîtier de connecteurs électriques 35, les parties de la chaîne reliant un côté des éléments de boîtier étant égales à celles reliant l'autre côté des éléments de boîtier.

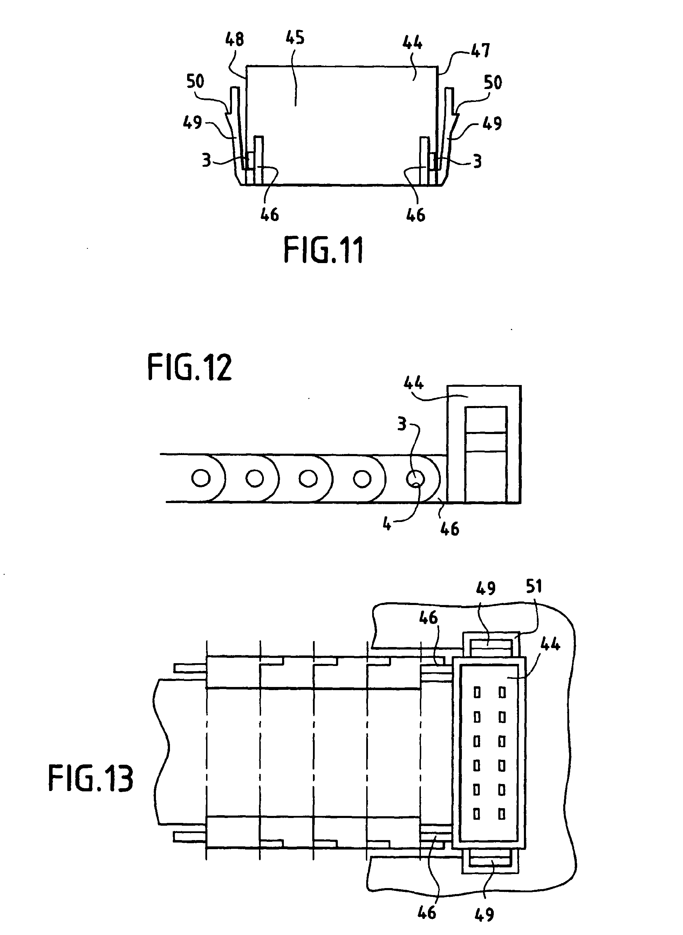

Comme généralement l'une des extrémités de la chaîne est destinée à être solidaire d'un élément fixe et l'autre d'un élément mobile, on peut prévoir (voir figures 11, 12 et 13) que l'élément de boîtier est pourvu de moyens d'assujettissement.

A la figure 11, on a représenté un élément de boîtier 44 d'un connecteur électrique dont une face 45 comporte deux pattes 46 pourvues de tétons 3 destinés à coopérer avec les trous 4 du maillon voisin.

L'élément de boîtier 44, sur ses côtés 47 et 48, comporte des languettes de verrouillage élastiques 49 présentant un épaulement de retenue 50, ledit élément de boîtier étant destiné à être inséré dans une ouverture 51 d'un élément fixe, par exemple, pour permettre la fixation à ladite partie fixe, les languettes 49 s'effaçant élastiquement lors de la mise en place dans l'ouverture 51 de manière que les épaulements 50 viennent porter contre les bords correspondant de cette dernière.

Grâce à l'invention, on peut réaliser directement la chaîne avec son câblage et, au moment du montage, la pose ainsi que la liaison électrique sont très rapides, par exemple, les conducteurs électriques pourraient être remplacés par des conducteurs optiques, pneumatiques ou hydrauliques.

Bien entendu, l'invention n'est pas limitée aux modes de réalisation qui viennent d'être décrits et représentés. On pourra y apporter de nombreuses modifications dans le cadre fixé par le jeu de revendications.

## Revendications

1. Dispositif de support et de guidage de conducteurs du type constitué d'une série de maillons (1) creux, articulés les uns aux extrémités des autres pour former une chaîne dont une extrémité est destinée à être reliée à une partie fixe et l'autre à une partie mobile telle qu'un siège avant de véhicule ou une porte coulissante, dans ladite chaîne étant insérée une série de
) conducteurs (9, 14), l'un des maillons (17) au moins étant conformé de manière à présenter un élément de boîtier (18) d'un connecteur, **caractérisé en ce que** chaque maillon conformé de manière à présenter un élément de boîtier de connecteur comprend un corps parallélépipédique (18) avec une série de canaux (25) débouchant à une surface dite supérieure du boîtier et destinés à recevoir chacun un organe de liaison tel qu'un organe de contact électrique (30) mâle ou femelle (26) destiné à coopérer avec un organe de liaison correspondant logé dans un élément de boîtier complémentaire, l'une des parois latérales perpendiculaire (19) à la surface supérieure du corps (18) parallélépipédique comportant deux pattes (24) destinées à s'articuler sur le maillon voisin.

2. Dispositif de support et de guidage de conducteurs, selon la revendication 1, **caractérisé en ce qu'**il comporte deux maillons conformés de manière à présenter un élément de boîtier (18) de connecteur.

3. Dispositif de support et de guidage de conducteurs, selon la revendication 2, **caractérisé en ce que** les maillons (17) conformés de manière à présenter un élément de boîtier (18) de connecteur sont disposés aux extrémités de la chaîne.

4. Dispositif de support et de guidage de conducteurs électriques, selon la revendication 2, **caractérisé en ce que** les maillons forment une chaîne fermée (42) et les maillons conformés de manière à présenter un élément de boîtier (35) sont situés en des points de la chaîne de manière que la longueur des parties de la chaîne reliant un côté des maillons conformés de manière à présenter un élément de boîtier de connecteur soit égale à la longueur des parties de la chaîne reliant l'autre côté.

5. Dispositif de support et de guidage de conducteurs électriques, selon la revendication 1, **caractérisé en ce que** les maillons (44) conformés de manière à présenter un élément de boîtier de connecteur comportent des moyens pour leur assujettissement sur un organe fixe ou mobile.

6. Dispositif de support et de guidage de conducteurs, selon la revendication 5, **caractérisé en ce que** les maillons (44) conformés de manière à présenter un élément de boîtier de connecteur comportent, sur deux parois opposées, des pattes de verrouillage (49).

7. Dispositif de support et de guidage de conducteurs, selon les revendications 1 et 4, **caractérisé en ce que** chaque maillon (40) conformé de manière à présenter un élément de boîtier de connecteur présente, sur la face opposée à celle pourvue des deux pattes (37) destinées à s'articuler sur le maillon voisin, deux autres pattes (41) destinées à s'articuler sur le maillon correspondant.

## Claims

1. Device for supporting and guiding conductors of the type consisting of a row of hollow chain links (1), which are articulated to one another at the ends to form a chain, one end of which is designed to be connected to a fixed part and the other end of which is connected to a movable part such as a front seat of a vehicle or sliding door, wherein a row of conductors (9; 14) is inserted into said chain, at least one of the chain links (17) is designed in the form of a housing element (18) for a connector, **characterised in that** each chain link shaped so as to provide a housing element for a connector comprises a parallelepiped body (18) with a series of channels (25) opening into an upper surface of the housing and designed to each receive a connecting member such as a male (30) or female (26) electrical contact member designed to cooperate with a corresponding connecting member accommodated in a complementary housing element, one of the lateral walls (19) perpendicular to the upper surface of the parallelepiped body (18) comprising two tabs (24) designed to be articulated with the adjacent chain link.

2. Device for supporting and guiding conductors according to claim 1, **characterised in that** it comprises two chain links shaped to as to provide a housing element (18) for the connector.

3. Device for supporting and guiding conductors according to claim 2, **characterised in that** the chain links (17) shaped so as to provide a housing element (18) for the connector are arranged at the ends of the chain.

4. Device for supporting and guiding electrical conductors according to claim 2, **characterised in that** the chain links form a closed chain (42) and the chain links shaped so as to provide a housing element (35) are situated at points of the chain such that the length of parts of the chain connecting one side of the chain links shaped to as to provide a housing element for the connector are equal to the length of parts of the chain connecting the other side.

5. Device for supporting and guiding electrical conductors according to claim 1, **characterised in that** the chain links (44) shaped so as to provide a housing element for the connector comprise means for their securement onto a fixed or mobile member.

6. Device for supporting and guiding conductors according to claim 5, **characterised in that** the chain links (44) shaped in such way as to provide a housing element for the connector comprise, on two opposite walls, locking tabs (49).

7. Device for supporting and guiding conductors according to claims 1 and 4, **characterised in that** each chain link (40) shaped in such a way as to provide a housing element for the connector has, on the face opposite the one provided with two tabs (37) designed to articulate with the adjacent chain link, two other tabs (41) designed to articulate with the corresponding chain link.

## Patentansprüche

1. Vorrichtung zum Stützen und Führen von Leitern vom Typ bestehend aus einer Reihe von hohlen Gliedern (1), die an ihren Enden aneinander angelenkt sind, um eine Kette zu bilden, deren eines Ende dazu bestimmt ist, mit einem festen Teil verbunden zu werden, und deren anderes Ende dazu bestimmt ist, mit einem beweglichen Teil wie einem Fahrzeug-Vordersitz oder einer Schiebetür verbunden zu werden, wobei in die genannte Kette eine Reihe von Leitern (9, 14) eingelegt ist, wobei zumindest eines der Glieder (17) dergestalt ausgeformt ist, dass es ein Gehäuseelement (18) eines Verbinders bildet, **dadurch gekennzeichnet, dass** jedes Glied, das dergestalt ausgeformt ist, dass es ein Gehäuseelement eines Verbinders bildet, einen parallelepipedischen Körper (18) mit einer Reihe von Kanälen (25) umfasst, die zu einer obere Fläche genannten Fläche des Gehäuses führen und dazu bestimmt sind, jeweils ein Verbindungsorgan aufzunehmen, wie ein elektrisches männliches (30) oder weibliches (26) Kontaktorgan, welches dazu bestimmt ist, mit einem entsprechenden Verbindungsorgan zusammenzuwirken, welches in einem komplementären Gehäuseelement aufgenommen ist, wobei eine der zur oberen Fläche des parallelepipedischen Körpers (18) senkrechten Seitenwände (19) zwei Laschen (24) aufweist, die zum Anlenken an das benachbarte Glied bestimmt sind.

2. Vorrichtung zum Stützen und Führen von Leitern nach Anspruch 1, **dadurch gekennzeichnet, dass** sie zwei Glieder umfasst, die dergestalt ausgeformt sind, dass sie ein Gehäuseelement (18) eines Verbinders ausbilden.

3. Vorrichtung zum Stützen und Führen von Leitern nach Anspruch 2, **dadurch gekennzeichnet, dass** die Glieder (17), die dergestalt ausgeformt sind, dass sie ein Gehäuseelement (18) eines Verbinders ausbilden, an den Enden der Kette angeordnet sind.

4. Vorrichtung zum Stützen und Führen von elektrischen Leitern nach Anspruch 2, **dadurch gekennzeichnet, dass** die Glieder eine geschlossene Kette (42) bilden und die Glieder, die dergestalt ausgeformt sind, dass sie ein Gehäuseelement (35) ausbilden, so an Punkten der Kette angeordnet sind, dass die Länge der Teile der Kette, welche eine Seite der Glieder, die dergestalt ausgeformt sind, dass sie ein Gehäuseelement eines Verbinders ausbilden, verbinden, gleich der Länge der Teile der Kette ist, die die andere Seite verbinden.

5. Vorrichtung zum Stützen und Führen von elektrischen Leitern nach Anspruch 1, **dadurch gekennzeichnet, dass** die Glieder (44), die dergestalt ausgeformt sind, dass sie ein Gehäuseelement eines Verbinders bilden, Mittel aufweisen, um sie an einem festen oder beweglichen Organ zu befestigen.

6. Vorrichtung zum Stützen und Führen von Leitern nach Anspruch 5, **dadurch gekennzeichnet, dass** die Glieder (44), die dergestalt ausgeformt sind, dass sie ein Gehäuseelement eines Verbinders bilden, an zwei gegenüberliegenden Wänden Verriegelungslaschen (49) aufweisen.

7. Vorrichtung zum Stützen und Führen von Leitern nach Anspruch 1 und 4,
**dadurch gekennzeichnet, dass** jedes Glied (40), das dergestalt ausgeformt ist, dass es ein Gehäuseelement eines Verbinders bildet, an der Seite, die der Seite, die mit den beiden Laschen (37), die dazu bestimmt sind, ein Gelenk mit dem Nachbarglied zu bilden, versehen ist, gegenüberliegt, zwei weitere Laschen (41) aufweist, die zum Anlenken an das korrespondierende Glied bestimmt sind.
